# FASCICULE DE BREVET EUROPEEN

(11) **EP 3 931 267 B1**
(45) Date de publication et mention de la délivrance du brevet: **01.03.2023**
(21) Numéro de dépôt: 20721098.0
(22) Date de dépôt: 24.02.2020
(51) Int. Cl.: C09C 1/02

(54) **RÉDUCTION DE L'HYGROSCOPICITÉ D'UN MATÉRIAU MINÉRAL**
VERFAHREN ZUR VERMINDERUNG DER HYGROSKOPIZITÄT EINES MINERALISCHEN MATERIALS
METHOD FOR REDUCING THE HYGROSCOPICITY OF A MINERAL MATERIAL

(30) Priorité: 26.02.2019 FR 1901931
(43) Date de publication de la demande: 05.01.2022
(73) Titulaire: Coatex, 69730 Genay (FR)
(72) Inventeur: JACQUEMET, Christian, 69005 Lyon (FR); MONGOIN, Jacques, 69650 Quincieux (FR); SUAU, Jean-Marc, 69480 Lucenay (FR)
(74) Mandataire: Balmefrezol, Ludovic Francis Pierre
(86) Numéro de dépôt international: PCT/FR2020/000040
(87) Numéro de publication internationale: WO 2020/178489

(56) Documents cités:
- WO-A1-2014/049252
- WO-A1-2018/109400
- WO-A2-02/49765

## Description

L'invention concerne le domaine des matériaux à base de carbonate de calcium et en particulier leur utilisation comme charge de matériaux polymères plastiques. L'invention fournit une méthode de réduction de l'hygroscopicité d'un matériau (M) comprenant du carbonate de calcium par traitement au moyen d'au moins un copolymère d'aide au broyage (P) qui est neutralisé de manière particulière. L'invention concerne également une méthode de conditionnement de ce matériau (M) possédant alors une hygroscopicité réduite.

Dans le domaine des matériaux polymères plastiques, et en particulier des résines polyoléfines, il est important de pouvoir disposer de méthodes de préparation alternatives, notamment de méthodes permettant de diminuer les quantités de polymères utilisés. Ainsi, il est possible de substituer une part de ces polymères par des matériaux de charge lors de la préparation des matériaux polymères plastiques.

Ces matériaux de charge doivent posséder des propriétés particulières pour pouvoir être mis en oeuvre pour ces méthodes de préparation. En particulier, ces matériaux de charge doivent posséder une forte compatibilité avec les polymères auxquels ils sont associés. Ces matériaux de charge ne doivent pas conduire à une dégradation des propriétés des matériaux polymères plastiques dans lesquels ils sont intégrés, par exemple une dégradation des propriétés mécaniques ou optiques de ces matériaux. Ces matériaux de charge ne doivent pas perturber les méthodes de préparation des matériaux polymères plastiques dans lesquels ils sont incorporés.

En particulier, ces matériaux de charge doivent posséder des propriétés améliorées en présence d'humidité. Ils doivent notamment posséder une hygroscopicité améliorée, en particulier une hygroscopicité réduite. Ainsi, ces matériaux doivent posséder une capacité réduite à absorber l'humidité présente dans leur environnement, notamment lors de leur préparation ou bien lors de leur utilisation pour la préparation de matériaux polymères plastiques, en particulier lors de leur stockage ou de leur utilisation pour la préparation de résines polyoléfines.

Généralement, ces matériaux de charge sont des matériaux d'origine minérale. Ils peuvent notamment être choisis parmi les matériaux comprenant du carbonate de calcium.

Ces matériaux comprenant du carbonate de calcium sont utilisés sous forme de particules qui sont préparées par voie chimique ou bien par broyage et dispersion de matières minérales, notamment par broyage par voie humide. Les méthodes de préparation de ces matériaux de charge doivent donc également être améliorées pour être mises en oeuvre à forte concentration en matière solide tout en permettant d'obtenir des matériaux de charge possédant des propriétés finales améliorées. Le contrôle de la viscosité lors des différentes étapes de préparation de ces matériaux de charge est également une propriété recherchée. Lors de la mise en oeuvre de ces méthodes de préparation de matériaux de charge, des agents d'aide au broyage ou des agents dispersants sont habituellement utilisés. Toutefois, les méthodes de l'état de la technique, et notamment les agents d'aide au broyage ou les agents dispersants qui sont utilisés, continuent de poser des problèmes.

Il est donc important de pouvoir disposer de méthodes et de moyens améliorés pour la préparation et l'utilisation de ces matériaux de charge de matériaux polymères plastiques. Le document WO 2014/049252 décrit un procédé de préparation d'un polymère de l'acide (méth)acrylique ayant une masse moléculaire inférieure à 8 000 g/mol en présence d'une combinaison d'un composé disulfure et d'un système initiateur de polymérisation. Le document WO 02/49765 divulgue l'utilisation d'homopolymères ou de copolymères de l'acide (méth)acrylique et d'un ou plusieurs monomères acryliques, vinyliques ou allyliques comme agent de dispersion ou comme agent d'aide au broyage de matière minérale en suspension aqueuse. Le document WO 2018/109400 concerne également le broyage en présence d'eau d'une matière minérale en présence d'au moins un polymère de l'acide (méth)acrylique préparé en présence d'hypophosphite de sodium et de dipropionate trithiocarbonate disodique.

L'invention concerne une méthode de traitement d'un matériau qui permet d'apporter une solution à tout ou partie des problèmes des méthodes de l'état de la technique.

Ainsi, l'invention fournit une méthode de réduction de l'hygroscopicité d'un matériau (M) comprenant du carbonate de calcium et destiné à être utilisé dans un matériau polymérique, comprenant le traitement du matériau (M), au moyen d'au moins un copolymère d'aide au broyage (P) :
- dont la masse moléculaire Mw (mesurée par CES) va de 4 000 à 20 000 g/mol,
- dont l'indice de polymolécularité (Iₚ) va de 1,5 à 4,0 et
- préparé par une réaction de polymérisation :
   - d'au moins un composé choisi parmi acide acrylique, acide méthacrylique, leurs sels et leurs combinaisons et
   - d'au moins un monomère non-ionique choisi parmi hydroxyéthylacrylate, hydroxypropylacrylate, hydroxyéthylméthacrylate, hydroxypropylméthacrylate, les esters en C₁-C₅ d'acide acrylique, les esters en C₁-C₅ d'acide méthacrylique et leurs combinaisons, et dont
   - les groupements acides carboxyliques sont partiellement ou totalement neutralisés par :
      ∘ 70 % molaire de Na⁺ et
      ∘ de 10 à 30 % molaire par au moins un cation choisi parmi Na⁺, K⁺, Li⁺ et leurs combinaisons.

Lors de la préparation du copolymère d'aide au broyage (P) mis en oeuvre selon l'invention, les proportions des monomères utilisés peuvent varier. De manière préférée, le copolymère (P) est préparé avec au moins 60 % en poids d'au moins un composé choisi parmi acide acrylique, acide méthacrylique, leurs sels et leurs combinaisons. De manière également préférée, la quantité de ce monomère peut être supérieure à 70 % en poids ou encore être supérieure à 80 % en poids. En particulier, la quantité de ce monomère peut aller de 60 à 99 % en poids ou de 70 à 99 % en poids ou de 80 à 99 % en poids.

Le copolymère (P) est alors préparé avec une quantité complémentaire d'au moins un monomère non-ionique choisi parmi hydroxyéthylacrylate, hydroxypropylacrylate, hydroxyéthylméthacrylate, hydroxypropylméthacrylate, les esters en C₁-C₅ d'acide acrylique, les esters en C₁-C₅ d'acide méthacrylique et leurs combinaisons.

De manière préférée, la méthode selon l'invention comprend :
A. la préparation d'une suspension aqueuse du matériau (M) comprenant :
   A1. de l'eau,
   A2. au moins un matériau (M) et
   A3. au moins un copolymère (P),
B. le broyage par voie humide du matériau (M) dans la suspension aqueuse et
C. la séparation partielle de l'eau de la suspension aqueuse comprenant le matériau (M) broyé.

Selon l'invention, lors de la préparation (A) de la suspension aqueuse du matériau (M), différents modes opératoires peuvent être mis en oeuvre séparément ou en combinaison. Ainsi, cette suspension peut être préparée en mélangeant simultanément de l'eau, le matériau (M) et le copolymère (P).

Il est également possible de mélanger séparément de l'eau et le matériau (M) puis d'ajouter le copolymère (P).

Il est également possible de mélanger séparément de l'eau et le copolymère (P) puis d'ajouter le matériau (M).

Enfin, il est également possible de mélanger séparément le matériau (M) et le copolymère (P) puis d'ajouter de l'eau.

De manière préférée selon l'invention, la méthode comprend également :
D. le séchage de la suspension du matériau (M) broyé et éventuellement
E. le traitement du matériau (M) broyé et séché, au moyen d'au moins un agent d'hydrophobisation.

Ainsi, la mise en oeuvre de la méthode selon l'invention permet d'apporter des propriétés particulières au matériau (M) qui sont particulièrement utiles lors de l'utilisation du matériau (M) ainsi conditionné. L'invention fournit donc également une méthode de conditionnement d'un matériau (M) de charge pour polymère plastique, comprenant du carbonate de calcium et possédant une faible sensibilité à l'humidité. La méthode de conditionnement selon l'invention comprend le traitement du matériau (M) au moyen d'au moins un copolymère d'aide au broyage (P) préparé par une réaction de polymérisation :
- d'au moins un composé choisi parmi acide acrylique, acide méthacrylique, leurs sels et leurs combinaisons,
- d'au moins un monomère non-ionique choisi parmi hydroxyéthylacrylate, hydroxypropylacrylate, hydroxyéthylméthacrylate, hydroxypropylméthacrylate, les esters en C₁-C₅ d'acide acrylique, les esters en C₁-C₅ d'acide méthacrylique et leurs combinaisons, et dont
- la masse moléculaire Mw (mesurée par CES) va de 4 000 à 20 000 g/mol,
- l'indice de polymolécularité (IP) va de 1,5 à 4,0 et dont
- les groupements acides carboxyliques sont partiellement ou totalement neutralisés par :
   - 70 % molaire de Na⁺ et
   - de 10 à 30 % molaire par au moins un cation choisi parmi Na+, K+, Li+ et leurs combinaisons.

Les caractéristiques préférées, particulières ou avantageuses de la méthode de réduction de l'hygroscopicité d'un matériau (M) selon l'invention définissent des méthodes de conditionnement selon l'invention qui sont également préférées, particulières ou avantageuses.

De manière préférée selon l'invention, le matériau (M) comprenant du carbonate de calcium est choisi parmi le marbre, le calcaire, la craie, la dolomie, leurs mélanges et leurs combinaisons. Le carbonate de calcium mis en oeuvre selon l'invention peut donc être d'origine naturelle mais également d'origine synthétique. De manière préférée, le carbonate de calcium d'origine synthétique (PCC) est choisi parmi vatérite, calcite aragonite, leurs mélanges et leurs combinaisons.

De manière préférée selon l'invention, le matériau (M) broyé possède un diamètre médian de particules d₅₀ en poids (déterminé par sédimentation) de 0,1 à 3 µm, de préférence de 0,1 à 2,8 µm, plus préférentiellement de 0,4 à 2,6 µm, bien plus préférentiellement de 0,6 à 2,5 µm. De manière également préférée selon l'invention, le matériau (M) broyé possède une surface spécifique mesurée selon la méthode BET selon la norme ISO9277 (2010) allant de 1 à 50 m²/g, préférentiellement de 2 à 20 m²/g et plus préférentiellement de 3 à 10 m²/g.

De manière également préférée, la suspension aqueuse de l'étape (A) comprend de 40 à 70 % en poids, de préférence de 50 à 70 % en poids, de matériau (M).

Selon l'invention, l'étape (B) de broyage de la suspension (M) préparée lors de l'étape (A) est suivie de l'étape (C) de séparation permettant d'augmenter la concentration en poids de matériau (M) broyé par rapport à la quantité en poids de suspension.

Ainsi et de manière également préférée, la suspension aqueuse obtenue après la séparation (C) comprend au moins 72 % en poids, de préférence au moins 74 % en poids de matériau (M) broyé par rapport à la quantité en poids de suspension. Plus préférentiellement, la suspension aqueuse obtenue après la séparation (C) comprend au moins 76 % en poids, en particulier de 72 à 81 % en poids ou de 74 à 81 % en poids ou encore de 76 à 81 % en poids, de matériau (M) broyé par rapport à la quantité en poids de suspension.

De manière essentielle, l'invention comprend la mise en oeuvre d'au moins un copolymère (P). Selon l'invention, le copolymère (P) est préparé par une réaction de polymérisation :
- d'au moins un composé choisi parmi acide acrylique, acide méthacrylique, leurs sels et leurs combinaisons et
- d'au moins un monomère non-ionique choisi parmi hydroxyéthylacrylate, hydroxypropylacrylate, hydroxyéthylméthacrylate, hydroxypropylméthacrylate, les esters en C₁-C₅ d'acide acrylique, les esters en C₁-C₅ d'acide méthacrylique et leurs combinaisons.

De manière préférée, le copolymère (P) est préparé par une réaction de polymérisation d'acide méthacrylique et d'hydroxypropylacrylate, d'acide acrylique et d'acrylate d'éthyle, d'acide acrylique et d'acrylate de butyle, d'acide acrylique et de méthacrylate de méthyle, d'acide acrylique et d'hydroxypropylacrylate.

De manière préférée, les groupements acides carboxyliques du copolymère (P) sont partiellement neutralisés. De manière plus préférée, la neutralisation est réalisée au moyen de Na⁺. Bien plus préférentiellement, les groupements acides carboxyliques du copolymère (P) sont neutralisés à au moins 80 % molaire par Na⁺, bien plus préférentiellement neutralisés à au moins 90 % molaire par Na⁺ ou neutralisés à 100 % molaire par Na⁺. Également préférentiellement, lorsque les groupements acides carboxyliques du copolymère (P) sont partiellement neutralisés à au moins 80 % molaire par Na⁺, les autres groupements acides carboxyliques du copolymère (P) sont sous forme acide libre ou bien sont partiellement neutralisés par au moins un cation choisi parmi K⁺, Li⁺ et leurs combinaisons.

La méthode selon l'invention comprend également le broyage par voie humide du matériau (M) dans la suspension aqueuse préparée préalablement. De manière préférée, le broyage (B) est réalisé en présence de 0,05 à 0,5 % en poids de copolymère (P) par rapport à la quantité en poids de matériau (M). De manière également préférée, le broyage (B) est réalisé en présence de 0,08 à 0,4 % en poids de copolymère (P) par rapport à la quantité en poids de matériau (M). Plus préférentiellement, le broyage (B) est réalisé en présence de 0,1 à 0,3 % en poids de copolymère (P) par rapport à la quantité en poids de matériau (M). Bien plus préférentiellement, le broyage (B) est réalisé en présence de 0,12 à 0,2 % en poids de copolymère (P) par rapport à la quantité en poids de matériau (M).

De manière également préférée, la séparation partielle (C) de l'eau de la suspension aqueuse est réalisée par au moins un moyen choisi parmi un moyen mécanique, un moyen thermique ; de préférence par un moyen thermique, éventuellement sous vide ou éventuellement combiné à un moyen d'aspiration. De manière plus préférée, la séparation partielle (C) de l'eau de la suspension aqueuse est réalisée par au moins un moyen thermique.

De manière également préférée, le matériau (M) broyé est séché par au moins un moyen choisi parmi un moyen d'atomisation, un moyen de lyophilisation, un moyen de pulvérisation, un four rotatif, une bande chauffante, un moyen de chauffage par jet, un lit fluidisé, un moyen de lyophilisation fluidisé et un moyen de séchage par buse. De manière plus préférée, le matériau (M) broyé est séché par au moins un moyen de pulvérisation. Selon l'invention, le matériau (M) broyé et séché est traité au moyen d'au moins un agent d'hydrophobisation. De manière préférée, l'agent d'hydrophobisation est choisi parmi un acide carboxylique, de préférence un acide carboxylique aliphatique, notamment un acide carboxylique C₄-C₂₄-aliphatique. De manière particulièrement préférée, l'agent d'hydrophobisation est un acide monocarboxylique aliphatique, notamment un acide monocarboxylique C₄-C₂₄-aliphatique. L'acide stéarique est l'agent d'hydrophobisation préféré.

L'agent d'hydrophobisation peut également être choisi parmi un dérivé d'anhydride d'acide succinique monosubstitué par un groupement C₂-C₃₀-alkyl linéaire, ramifié ou cyclique, et un produit de réaction d'un tel dérivé.

L'agent d'hydrophobisation peut également être choisi parmi un mélange de mono-esters d'acide phosphorique, de diesters d'acide phosphorique ou de leurs produits de réaction ou bien choisi parmi un polyhydrogenosiloxane, un composé silicone inerte, de préférence une huile silicone inerte, notamment polydiméthylsiloxane, et leurs mélanges ou bien encore choisi parmi un aldéhyde aliphatique en C₆-C₁₄, de préférence un aldéhyde aliphatique en C₆-C₁₂, plus préférentiellement un aldéhyde aliphatique en C₈-C₉, en particulier hexanal, heptanal, octanal, nonanal, decanal, undecanal, dodecanal, tridecanal, butadecanal et leurs mélanges. L'agent d'hydrophobisation peut également être choisi parmi acide butanoïque, acide pentanoïque, acide hexanoïque, acide hetpanoïque, acide octanoïque, acide nonanoïque, acide decanoïque, acide undecanoïque, acide laurique, acide tridecanoïque, acide myristique, acide pentadecanoïque, acide palmitic, acide heptadecanoïque, acide stéarique, acide nonadecanoïque, acide arachidique, acide heneicosylique, acide behenique, acide lignocerique et leurs combinaisons.

De manière particulièrement, l'invention permet d'obtenir un matériau possédant des propriétés améliorées. De manière préférée, le matériau (M) broyé et séché comprend moins de 0,5 % en poids, de préférence moins de 0,4 % en poids ou moins de 0,2 % en poids, d'humidité par rapport à la quantité totale de matériau (M).

De manière également préférée, le matériau (M) broyé, séché et traité possède une hygroscopicité inférieure ou égale à 0,26 mg/m², de préférence inférieure ou égale à 0,21 mg/m², mesurée selon la méthode décrite dans les exemples.

De manière plus préférée, le matériau (M) broyé, séché et traité au moyen d'au moins un agent d'hydrophobisation, possède une hygroscopicité inférieure ou égale à 0,26 mg/m², de préférence inférieure ou égale à 0,21 mg/m², mesurée selon la méthode décrite dans les exemples.

La méthode selon l'invention permet d'obtenir un matériau (M) qui possède une hygroscopicité réduite. L'utilisation comme charge de matériaux polymères plastiques de ce matériau (M) traité est alors particulièrement avantageuse. En particulier, le matériau (M) obtenu selon l'invention peut être utilisé comme charge de matériaux polymères plastiques choisis parmi les polyoléfines, les polyamides, les polymères halogénés et les polyesters.

Les exemples qui suivent permettent d'illustrer les différents aspects de l'invention.

### EXEMPLES

### Méthodes de mesure des propriétés

### Mesure de la masse moléculaire moyenne en poids (Mw) et de la polymolécularité (Ip) des polymères selon l'invention et comparatifs

Selon l'invention, le poids moléculaire des copolymères est déterminé par Chromatographie d'Exclusion Stérique (CES) ou en anglais « Gel Permeation Chromatography » (GPC). Cette technique met en oeuvre un appareil de chromatographie liquide de marque Waters doté d'un détecteur. Ce détecteur est un détecteur de concentration réfractométrique de marque Waters. Cet appareillage de chromatographie liquide est doté d'une colonne d'exclusion stérique afin de séparer les différents poids moléculaires des copolymères étudiés. La phase liquide d'élution est une phase aqueuse ajustée à pH 9,00 au moyen de soude 1 N contenant 0,05 M de NaHCOs, 0,1 M de NaNO₃, 0,02 M de triéthanolamine et 0,03 % de NaN₃.

Selon une première étape, on dilue à 0,9 % sec la solution de copolymère dans le solvant de solubilisation de la CES, qui correspond à la phase liquide d'élution de la CES à laquelle est ajoutée 0,04 % de diméthylformamide qui joue le rôle de marqueur de débit ou étalon interne. Puis, on filtre à 0,2 µm. 100 µL sont ensuite injectés dans l'appareil de chromatographie (éluant : une phase aqueuse ajustée à pH 9,00 par de la soude 1N contenant 0,05 M de NaHCO₃, 0,1 M de NaNO₃, 0,02 M de triétanolamine et 0,03 % de NaN₃).

L'appareil de chromatographie liquide contient une pompe isocratique (Waters 515) dont le débit est réglé à 0,8 mL/min. L'appareil de chromatographie comprend également un four qui lui-même comprend en série le système de colonnes suivant : une précolonne de type Guard Column Ultrahydrogel Waters de 6 cm de longueur et 40 mm de diamètre intérieur et une colonne linéaire de type Ultrahydrogel Waters de 30 cm de longueur et 7,8 mm de diamètre intérieur. Le système de détection se compose d'un détecteur réfractométrique de type RI Waters 410. Le four est porté à la température de 60°C et le réfractomètre est porté à la température de 45°C.

L'appareil de chromatographie est étalonné au moyen d'étalons de polyacrylate de sodium en poudre de différentes masses moléculaires certifiées par le fournisseur : Polymer Standard Service ou American Polymers Standards Corporation (masse moléculaire allant de 900 à 2,25.10⁶ g/mol et indice de polymolécularité allant de 1,4 à 1,8).

### Mesure du pH

Le pH est mesuré à 25°C à l'aide d'un pH-mètre Mettler Toledo Seven Easy et d'une électrode de pH Mettler Toledo InLab Expert Pro. Un étalonnage à trois points (selon la méthode des segments) de l'instrument a tout d'abord été effectué à l'aide de solutions tampons disponibles dans le commerce, présentant des valeurs de pH de 4, 7 et 10 à 25°C (Aldrich). Les valeurs de pH rapportées étaient les valeurs finales détectées par l'instrument (le signal diffère de moins de 0,1 mV de la moyenne au cours des 6 dernières secondes).

### Mesure de la conductivité des suspensions de matériau minéral

La conductivité des suspensions est mesurée à 25°C avec un appareil Mettler Toledo Seven Multi équipé d'une extension Mettler Toledo correspondante et d'une sonde de conductivité Mettler Toledo InLab 731, directement après préparation de la suspension sous agitation à 1500 tour/min avec un agitateur à dents Pendraulik. L'instrument a été étalonné dans la plage de conductivité appropriée à l'aide de solutions commerciales (Mettler Toledo) d'étalonnage de conductivité. L'influence de la température sur la conductivité est corrigée automatiquement par le mode de correction linéaire. Les conductivités mesurées sont rapportées pour la température de référence de 20°C. Les valeurs de conductivité rapportées sont les valeurs de point final détectées par l'instrument, lorsque la conductivité mesurée diffère de moins de 0,4 % de la conductivité moyenne des 6 secondes précédentes.

### Répartition granulométrique et diamètre médian en poids des particules de matériau minéral

La distribution granulométrique (% en masse de particules de diamètre inférieur à une valeur fixée) et le diamètre médian en poids (d₅₀) des particules de matériau ont été déterminés par une méthode de sédimentation connue. Il s'agit d'une analyse du comportement de la sédimentation dans un champ gravimétrique. La mesure a été effectuée à 25°C au moyen d'un appareil Sedigraph 5100. La mesure a été effectuée dans une solution aqueuse à 0,1 % en poids de Na₄P₂O₇. Les échantillons de particules de matériau minéral sont dispersés à l'aide d'un agitateur à haute vitesse et à ultrasons.

### Mesure de la viscosité des suspensions de matériau minéral

La viscosité Brookfield a été mesurée à 25°C et à une vitesse de rotation de 100 tour/min, au moyen d'un viscosimètre Brookfield modèle RVT équipé d'un axe à disque 2, 3 ou 4 approprié.

### Mesure de la surface spécifique du matériau minéral broyé

La surface spécifique (m²/g) a été déterminée en utilisant la méthode BET (avec de l'azote en tant que gaz adsorbant) conformément à la norme ISO9277 (2010). La surface totale (m²) de la matière de remplissage a ensuite été obtenue par multiplication de la surface et de la masse (g) de l'échantillon correspondant.

### Mesure du taux de matière solide, ou extrait sec, des suspensions de matériau minéral

L'extrait sec (% en poids) est déterminé en divisant la masse du matériau solide par la masse totale de la suspension aqueuse. L'extrait sec en matériau solide est déterminé en pesant la quantité de matériau solide après évaporation de la phase aqueuse de la suspension puis séchage du matériau obtenu jusqu'à obtenir une masse constante.

### Mesure de l'hygroscopicité de matériau (M) obtenu selon l'invention ou comparatif

Après exposition à une atmosphère de 10 % d'humidité relative, pendant 2,5 heures et à une température de 23 ± 2°C, la masse d'un échantillon de matériau (M) obtenu selon l'invention est mesurée au moyen d'un appareil GraviTest 6300 (Gintronic).

Puis, l'humidité de l'atmosphère est modifiée pour atteindre 85 % d'humidité relative et l'échantillon de matériau (M) est exposé à cette atmosphère pendant 2,5 heures et à une température de 23 ± 2°C. La masse de l'échantillon de matériau (M) est alors mesurée à nouveau.

La variation de masse (mg/g d'échantillon) est ensuite calculée pour déterminer l'hygroscopicité du matériau (M).

De manière analogue, on détermine l'hygroscopicité d'un matériau (M) comparatif obtenu au moyen d'un polymère comparatif.

### Mesure de la teneur en humidité de matériau (M) obtenu selon l'invention ou comparatif

Un échantillon de matériau (M) obtenu selon l'invention (10 g) est chauffé à 150°C dans un four jusqu'à ce que sa masse soit constante durant 20 minutes. La perte de masse est déterminée par gravimétrie et est exprimée en % en poids à partir de la masse initiale de l'échantillon. Cette variation de masse permet de déterminer la teneur en humidité de l'échantillon.

De manière analogue, on détermine la variation de masse d'un matériau (M) comparatif obtenu au moyen d'un polymère comparatif.

### Préparation de copolymères (P) selon l'invention et de polymères comparatifs Polymère (P1) selon l'invention

Dans un réacteur de synthèse équipé d'un système d'agitation mécanique et d'un système de chauffage de type bain d'huile, 245 g d'eau sont introduits.

Le milieu est chauffé à 95°C, puis on ajoute simultanément et en continu, pendant 2 heures à l'aide de 3 pompes :
- une solution aqueuse constituée de 3,02 g de persulfate de sodium et 53 g d'eau,
- une solution aqueuse constituée de 10,2 g d'hypophosphite de sodium monohydraté et 39 g d'eau et
- 241 g d'acide acrylique et 152,5 g d'acrylate d'hydroxypropyle.

Le chauffage est poursuivi pendant 1 heure à 95°C.

On neutralise alors le polymère à l'aide de soude à 50 % en poids dans l'eau jusqu'à un pH de 8,5.

On dilue le polymère avec de l'eau afin d'atteindre une concentration de 45 % en poids sec.

On obtient un polymère ayant une masse moléculaire Mw de 14 100 g/mol et de 3,8 d'indice de polymolécularité.

### Polymère (P2) selon l'invention

Dans un réacteur de synthèse équipé d'un système d'agitation mécanique et d'un système de chauffage de type bain d'huile, sont introduits :
- eau : 253 g et
- hypophosphite de sodium monohydraté : 4,7 g.

Le milieu est chauffé à 85°C, puis on ajoute simultanément et en continu, pendant 2 heures à l'aide de 3 pompes :
- une solution aqueuse constituée de 3,4 g de persulfate de sodium et 53 g d'eau,
- une solution aqueuse constituée de 16,55 g d'hypophosphite de sodium monohydraté et 50 g d'eau et
- 284 g d'acide acrylique et 70 g d'acrylate d'éthyle.

Le chauffage est poursuivi pendant 1 heure à 84°C.

On neutralise alors le polymère à l'aide de soude à 50 % en poids dans l'eau jusqu'à un pH de 8,5.

On dilue le polymère avec de l'eau afin d'atteindre une concentration de 42 % en poids sec.

On obtient un polymère ayant une masse moléculaire Mw de 4 925 g/mol et de 2,2 d'indice de polymolécularité.

### Polymère comparatif (PCI)

Dans un réacteur de synthèse équipé d'un système d'agitation mécanique et d'un système de chauffage de type bain d'huile, sont introduits :
- eau : 241 g,
- sulfate de cuivre pentahydraté : 0,32 g et
- sulfate ferreux heptahydraté : 0,276 g.

Le milieu est chauffé à 95°C, puis on ajoute simultanément et en continu, pendant 2 heures :
- une solution aqueuse de 3,5 g à 20,9 % en poids de sel de sodium de DPTTC (numéro CAS 86470-33-2) dilué dans 31 g d'eau,
- 35,3 g d'eau oxygénée 130 V diluée dans 9,4 g d'eau et
- 279,9 g d'acide acrylique dilué dans 31 g d'eau.

Le chauffage est poursuivi pendant 1,5 heure à 95°C.

On obtient une solution d'acide polyacrylique ayant une masse moléculaire Mw de 6 000 g/mol et de 2,6 d'indice de polymolécularité.

La solution d'acide polyacrylique est traitée avec une solution de soude à 50 % en poids dans l'eau (212 g) et de Ca(OH)₂ (42,5g) et d'eau jusqu'à pH 8,7 et une concentration de 38 % en poids sec.

### Préparation, traitement et évaluation des propriétés de matériaux (M) selon l'invention et de matériaux comparatifs

On prépare une suspension aqueuse à partir d'un matériau (M) (marbre naturel originaire d'Avenza, Italie) dont la granulométrie mesurée est caractérisée par une valeur *d*₉₀ de 50 µm, une valeur de *d*₅₀ de10 µm et une valeur de *d*₂₀ de 2 µm. L'extrait sec de la suspension est d'environ 71 % en poids.

Sous agitation au moyen d'un mélangeur Ystral Dispermix, on introduit un polymère selon l'invention ou un polymère comparatif dans la suspension en une quantité en poids sec pour sec de 1 500 ppm.

Puis, le matériau (M) présent dans la suspension est broyé par voie humide en présence du polymère introduit précédemment. Le broyage est réalisé au moyen d'un broyeur à attrition vertical de 200 litres en utilisant des billes de silicate de zirconium d'un diamètre de 0,6 à 1,0 mm. La température de la suspension à l'entrée du broyeur est de 20°C et de 50 à 70°C à sa sortie. Les paramètres du broyeur sont ajustés afin d'atteindre une distribution granulométrique d'au moins 45 % de particules de taille inférieure à 2 µm. Les polymères utilisés et les caractéristiques des suspensions sont présentés dans le tableau 1.

**Tableau 1**

| | | | |
|---|---|---|---|
| Suspension | S1 | S2 | SC1 |
| Polymère | P1 | P2 | PC1 |
| Extrait sec (% en poids) | 71,5 | 71,4 | 71,5 |
| Viscosité (mPa.s) | 310 | 102 | 237 |
| Granulométrie finale (% < 2 µm) | 45,6 | 47,1 | 46,7 |
| pH | 9,3 | 9,4 | 9,0 |

On constate que pour des valeurs d'extraits secs très élevées (supérieures à 71 %), les suspensions selon l'invention possèdent des viscosités bien inférieures à la viscosité de la suspension comparative ne comprenant pas un polymère particulier sélectionné selon l'invention.

Puis, on sépare une partie de l'eau des suspensions à une température de 95°C au moyen d'un évaporateur à commande thermique Epcon. On laisse refroidir les suspensions et on mesure l'extrait sec, la viscosité à 25°C et la surface spécifique du matériau broyé. Les résultats sont présentés dans le tableau 2.

**Tableau 2**

| | | | |
|---|---|---|---|
| Suspension | S1 | S2 | SC1 |
| Polymère | P1 | P2 | PC1 |
| Extrait sec (% en poids) | 77,0 | 77,4 | 76,9 |
| Viscosité (mPa.s) | 1 170 | 463 | 3 112 |
| Surface spécifique (g/m²) | 4,8 | 5,3 | 5,9 |

On constate à nouveau que pour des valeurs d'extraits secs encore plus élevées (environ à 77 %), les suspensions selon l'invention possèdent des viscosités bien inférieures à la viscosité de la suspension comparative ne comprenant pas un polymère particulier sélectionné selon l'invention.

Les suspensions sont ensuite séchées par pulvérisation au moyen d'un sécheur Niro (GEA) fonctionnant à une vitesse de pulvérisation de 16 680 tour/min. La température du brûleur est de 400°C. La température de la tour de séchage est de 130°C.

Le matériau (M) broyé et séché obtenu est alors traité au moyen d'acide stéarique comme agent d'hydrophobisation en une quantité de 1,2 % en poids d'acide stéarique par rapport au poids sec de matériau (M), au moyen d'un mélangeur Somakon MP-LB (Somakon Verfahrenstechnik). Le matériau (M) est d'abord agité à 2 000 tour/min et chauffé à 120°C puis l'acide stéarique est ajouté pendant une période de 10 min en maintenant le chauffage et l'agitation. L'hygroscopicité est alors déterminée pour les différents matériaux (M) selon l'invention et comparatif. Les résultats sont présentés dans le tableau 3.

**Tableau 3**

| | | | |
|---|---|---|---|
| Suspension | S1 | S2 | SC1 |
| Polymère | P1 | P2 | PC1 |
| Hygroscopicité (mg/m²) | 0,19 | 0,21 | 0,27 |

On constate que l'utilisation d'un polymère particulier sélectionné selon l'invention confère une hygroscopicité améliorée par rapport au matériau (M) après séchage et traitement au moyen d'un agent d'hydrophobisation par rapport à un matériau (M) broyé en présence d'un polymère comparatif.

## Revendications

1. Méthode de réduction de l'hygroscopicité d'un matériau (M) comprenant du carbonate de calcium et destiné à être utilisé dans un matériau polymérique, comprenant le traitement du matériau (M), au moyen d'au moins un copolymère d'aide au broyage (P) :
- dont la masse moléculaire Mw (mesurée par CES) va de 4 000 à 20 000 g/mol,
- dont l'indice de polymolécularité (I_{P}) va de 1,5 à 4,0 et
- préparé par une réaction de polymérisation :
• d'au moins un composé choisi parmi acide acrylique, acide méthacrylique, leurs sels et leurs combinaisons et
• d'au moins un monomère non-ionique choisi parmi hydroxyéthylacrylate, hydroxypropylacrylate, hydroxyéthylméthacrylate, hydroxypropylméthacrylate, les esters en C₁-C₅ d'acide acrylique, les esters en C₁-C₅ d'acide méthacrylique et leurs combinaisons, et dont
• les groupements acides carboxyliques sont partiellement ou totalement neutralisés par :
∘ 70 % molaire de Na⁺ et
ο de 10 à 30 % molaire par au moins un cation choisi parmi Na⁺, K⁺, Li⁺ et leurs combinaisons.

2. Méthode selon la revendication 1 comprenant :
A. la préparation d'une suspension aqueuse du matériau (M) comprenant :
A1. de l'eau,
A2. au moins un matériau (M) et
A3. au moins un copolymère (P),
B. le broyage par voie humide du matériau (M) dans la suspension aqueuse et
C. la séparation partielle de l'eau de la suspension aqueuse comprenant le matériau (M) broyé.

3. Méthode selon la revendication 2 comprenant également :
D. le séchage de la suspension du matériau (M) broyé et éventuellement
E. le traitement du matériau (M) broyé et séché, au moyen d'au moins un agent d'hydrophobisation.

4. Méthode selon l'une des revendications 2 ou 3 pour laquelle :
- le matériau (M) broyé possède un diamètre médian de particules d₅₀ en poids (déterminé par sédimentation) de 0,1 à 3 µm, de préférence de 0,1 à 2,8 µm, plus préférentiellement de 0,4 à 2,6 µm, bien plus préférentiellement de 0,6 à 2,5 µm ou
- le matériau (M) broyé possède une surface spécifique mesurée selon la méthode BET selon la norme ISO9277 (2010) allant de 1 à 50 m²/g, préférentiellement de 2 à 20 m²/g et plus préférentiellement de 3 à 10 m²/g ou
- le matériau (M) est choisi parmi le marbre, le calcaire, la craie, la dolomie, leurs mélanges et leurs combinaisons ou bien est d'origine naturelle ou d'origine synthétique, par exemple vatérite, calcite aragonite, leurs mélanges et leurs combinaisons.

5. Méthode selon l'une des revendications 2 à 4 pour laquelle la suspension aqueuse de l'étape (A) comprend de 40 à 70 % en poids, de préférence de 50 à 70 % en poids, de matériau (M).

6. Méthode selon l'une des revendications 2 à 5 pour laquelle la suspension aqueuse obtenue après la séparation (C) comprend au moins 72 % en poids, de préférence au moins 74 % en poids, plus préférentiellement au moins 76 % en poids, en particulier de 72 à 81 % en poids ou de 74 à 81 % en poids ou encore de 76 à 81 % en poids, de matériau (M) broyé par rapport à la quantité en poids de suspension.

7. Méthode selon l'une des revendications 1 à 6 pour laquelle les groupements acides carboxyliques du copolymère (P) sont partiellement neutralisés, de préférence par Na⁺, plus préférentiellement neutralisés à au moins 80 % molaire par Na⁺, bien plus préférentiellement neutralisés à au moins 90 % molaire par Na⁺ ou neutralisés à 100 % molaire par Na⁺.

8. Méthode selon l'une des revendications 2 à 7 pour laquelle le broyage (B) est réalisé en présence de 0,05 à 0,5 % en poids, de préférence de 0,08 à 0,4 % en poids, plus préférentiellement de 0,1 à 0,3 % en poids, encore plus préférentiellement de 0,12 à 0,2 % en poids, de copolymère (P) par rapport à la quantité en poids de matériau (M).

9. Méthode selon l'une des revendications 2 à 8 pour laquelle la séparation partielle (C) de l'eau de la suspension aqueuse est réalisée par au moins un moyen choisi parmi un moyen mécanique, un moyen thermique ; de préférence par un moyen thermique, éventuellement sous vide ou éventuellement combiné à un moyen d'aspiration.

10. Méthode selon l'une des revendications 3 à 9 pour laquelle le matériau (M) broyé est séché par au moins un moyen choisi parmi un moyen d'atomisation, un moyen de lyophilisation, un moyen de pulvérisation, un four rotatif, une bande chauffante, un moyen de chauffage par jet, un lit fluidisé, un moyen de lyophilisation fluidisé et un moyen de séchage par buse ; de préférence par au moins un moyen de pulvérisation.

11. Méthode selon l'une des revendications 3 à 10 pour laquelle l'agent d'hydrophobisation est choisi parmi :
- un acide carboxylique, de préférence un acide carboxylique aliphatique, notamment un acide carboxylique C₄-C₂₄-aliphatique, plus préférentiellement un acide monocarboxylique aliphatique, notamment un acide monocarboxylique C₄-C₂₄-aliphatique, en particulier l'acide stéarique ;
- un dérivé d'anhydride d'acide succinique monosubstitué par un groupement C₂-C₃₀-alkyl linéaire, ramifié ou cyclique, et un produit de réaction d'un tel dérivé ;
- un mélange de mono-esters d'acide phosphorique, de diesters d'acide phosphorique ou de leurs produits de réaction ;
- un polyhydrogenosiloxane, un composé silicone inerte, de préférence une huile silicone inerte, notamment polydiméthylsiloxane, et leurs mélanges ;
- un aldéhyde aliphatique en C₆-C₁₄, de préférence un aldéhyde aliphatique en C₆-C₁₂, plus préférentiellement un aldéhyde aliphatique en C₈-C₉, en particulier hexanal, heptanal, octanal, nonanal, decanal, undecanal, dodecanal, tridecanal, butadecanal et leurs mélanges.

12. Méthode selon l'une des revendications 3 à 11 pour laquelle le matériau (M) broyé et séché comprend moins de 0,5 % en poids, de préférence moins de 0,4 % en poids ou moins de 0,2 % en poids, d'humidité par rapport à la quantité totale de matériau (M).

13. Méthode selon l'une des revendications 1 à 12 pour laquelle le matériau (M) broyé, séché et traité, éventuellement au moyen d'au moins un agent d'hydrophobisation, possède une hygroscopicité inférieure ou égale à 0,26 mg/m², de préférence inférieure ou égale à 0,21 mg/m², mesurée selon la méthode décrite dans les exemples.

## Patentansprüche

1. Verfahren zur Verringerung der Hygroskopizität eines Materials (M), das Calciumcarbonat enthält und in einem polymeren Material verwendet werden soll, umfassend die Behandlung des Materials (M) mit mindestens einem Copolymer als Mahlhilfsmittel (P):
- das eine Molekülmasse Mw (gemessen mittels SEC) von 4.000 bis 20.000 g/mol hat,
- das einen Polymolekularitätsindex (I_{P}) von 1,5 bis 4,0 hat, und
- das mittels Polymerisationsreaktion hergestellt wird, und zwar:
• mindestens einer Verbindung, ausgewählt aus Acrylsäure, Methacrylsäure, deren Salzen und Kombinationen davon, und
• mindestens eines nicht-ionischen Monomers, ausgewählt aus Hydroxyethylacrylat, Hydroxypropylacrylat, Hydroxyethylmethacrylat, Hydroxypropylmethacrylat, den Estern der C₁-C₅-Acrylsäure, den Estern der C₁-C₅-Methacrylsäure und Kombinationen davon, und
• wobei die Carbonsäuregruppen teilweise oder vollständig neutralisiert sind:
∘ zu 70 Mol-% mit Na⁺ und
∘ zu 10 bis 30 Mol-% mit mindestens einem Kation, ausgewählt aus Na⁺, K⁺, Li⁺ und Kombinationen davon.

2. Verfahren nach Anspruch 1, umfassend:
A. Herstellen einer wässrigen Suspension des Materials (M), umfassend:
A1. Wasser,
A2. mindestens ein Material (M) und
A3. mindestens ein Copolymer (P),
B. Nassmahlen des Materials (M) in der wässrigen Suspension und
C. teilweises Trennen des Wassers von der wässrigen Suspension, umfassend das gemahlene Material (M).

3. Verfahren nach Anspruch 2, umfassend zudem:
D. Trocknen der Suspension des gemahlenen Materials (M) und gegebenenfalls
E. Behandeln des gemahlenen und getrockneten Materials (M) mit mindestens einem Hydrophobierungsmittel.

4. Verfahren nach einem der Ansprüche 2 oder 3, wobei:
- das gemahlene Material (M) einen mittleren gewichtsbezogenen Partikeldurchmesser d₅₀ (ermittelt mittels Sedimentation) von 0,1 bis 3 µm, vorzugsweise von 0,1 bis 2,8 µm, noch mehr bevorzugt von 0,4 bis 2,6 µm, deutlich mehr bevorzugt von 0,6 bis 2,5 µm, hat oder
- das gemahlene Material (M) eine spezifische Oberfläche, gemessen nach der BET-Norm ISO9277 (2010), von 1 bis 50 m²/g, vorzugsweise 2 bis 20 m²/g und noch mehr bevorzugt 3 bis 10 m²/g, hat oder
- das Material (M) aus Marmor, Kalkstein, Kreide, Dolomit, deren Mischungen und Kombinationen davon ausgewählt ist oder natürlichen bzw. synthetischen Ursprungs ist, wie z. B. Vaterit, Calcit, Aragonit, Mischungen und Kombinationen davon.

5. Verfahren nach einem der Ansprüche 2 bis 4, wobei die wässrige Suspension aus Schritt (A) 40 bis 70 Gew.-%, vorzugsweise 50 bis 70 Gew.-%, an Material (M) umfasst.

6. Verfahren nach einem der Ansprüche 2 bis 5, wobei die wässrige Suspension, die nach dem Trennen (C) erhalten wird, mindestens 72 Gew.-%, vorzugsweise mindestens 74 Gew.-%, noch mehr bevorzugt mindestens 76 Gew.-%, insbesondere 72 bis 81 Gew.- % oder 74 bis 81 Gew.-% oder aber 76 bis 81 Gew.-%, des gemahlenen Materials (M), bezogen auf den Gewichtsanteil der Suspension, umfasst.

7. Verfahren nach einem der Ansprüche 1 bis 6, wobei die Carbonsäuregruppen des Copolymers (P) teilweise, vorzugsweise mit Na⁺, noch mehr bevorzugt zu mindestens 80 Mol-% mit Na⁺, noch viel mehr bevorzugt zu mindestens 90 Mol-% mit Na⁺ oder zu 100 Mol-% mit Na⁺ neutralisiert sind.

8. Verfahren nach einem der Ansprüche 2 bis 7, wobei das Mahlen (B) in Gegenwart von 0,05 bis 0,5 Gew.-%, vorzugsweise von 0,08 bis 0,4 Gew.-%, noch mehr bevorzugt von 0,1 bis 0,3 Gew.-%, noch viel mehr bevorzugt von 0,12 bis 0,2 Gew.-%, des Copolymers (P), bezogen auf den Gewichtsanteil des Materials (M), durchgeführt wird.

9. Verfahren nach einem der Ansprüche 2 bis 8, wobei das teilweise Trennen (C) des Wassers von der wässrigen Suspension durch mindestens ein Mittel durchgeführt wird, ausgewählt aus einem mechanischen Mittel, einem thermischen Mittel; vorzugsweise durch ein thermisches Mittel, gegebenenfalls unter Vakuum oder gegebenenfalls in Kombination mit einem Saugmittel.

10. Verfahren nach einem der Ansprüche 3 bis 9, wobei das gemahlene Material (M) durch mindestens ein Mittel getrocknet wird, ausgewählt aus einem Zerstäubungsmittel, einem Gefriertrocknungsmittel, einem Sprühmittel, einem Drehofen, einem Heizstreifen, einem Strahlheizgerät, einer Wirbelschicht, einem Wirbelschicht-Gefriertrocknungsmittel und einem Düsentrocknungsmittel, vorzugsweise mindestens einem Pulverisierungsmittel.

11. Verfahren nach einem der Ansprüche 3 bis 10, wobei das Hydrophobierungsmittel ausgewählt ist aus:
- einer Carbonsäure, vorzugsweise einer aliphatischen Carbonsäure, insbesondere einer aliphatischen C₄-C₂₄-Carbonsäure, noch mehr bevorzugt einer aliphatischen Monocarbonsäure, insbesondere einer aliphatischen C₄-C₂₄-Monocarbonsäure, insbesondere Stearinsäure;
- einem Derivat aus Bernsteinsäureanhydrid, monosubstituiert mit einer linearen, verzweigten oder zyklischen C₂-C₃₀-Alkylgruppe, und einem Reaktionsprodukt dieses Derivats;
- einer Mischung aus Monoestern der Phosphorsäure und Distern der Phosphorsäure oder deren Reaktionsprodukten;
- einem Polyhydrogensiloxan, einer inerten Silikonverbindung, vorzugsweise einem inerten Silikonöl, insbesondere Polydimethylsiloxan, und Mischungen davon;
- einem aliphatischen C₆-C₁₄-Aldehyd, vorzugsweise einem aliphatischen C₆-C₁₂-Aldehyd, noch mehr bevorzugt einem aliphatischen C₈-C₉-Aldehyd, insbesondere Hexanal, Heptanal, Octanal, Nonanal, Decanal, Undecanal, Dodecanal, Tridecanal, Butadecanal und Mischungen davon.

12. Verfahren nach einem der Ansprüche 3 bis 11, wobei das gemahlene und getrocknete Material (M) weniger als 0,5 Gew.-%, vorzugsweise weniger als 0,4 Gew.-% oder weniger als 0,2 Gew.-%, Feuchtigkeit, bezogen auf den Gesamtanteil des Materials (M), umfasst.

13. Verfahren nach einem der Ansprüche 1 bis 12, wobei das Material (M), gegebenenfalls mit mindestens einem Hydrophobierungsmittel, gemahlen, getrocknet und behandelt wird und eine Hygroskopizität von kleiner oder gleich 0,26 mg/m², vorzugsweise kleiner oder gleich 0,21 mg/m², gemessen laut dem in den Beispielen beschriebenen Verfahren, hat.

## Claims

1. A method for reducing the hygroscopicity of a material (M) comprising calcium carbonate and intended for use in a polymeric material, comprising the treatment of the material (M) with at least one grinding aid copolymer (P):
- of which the molecular mass Mw (measured by SEC) ranges from 4,000 to 20,000 g/mol,
- of which the polymolecularity index (P_{I}) ranges from 1.5 to 4.0 and
- prepared by polymerisation reaction:
• of at least one compound chosen among acrylic acid, methacrylic acid, salts thereof and combinations thereof and
• of at least one non-ionic monomer chosen among hydroxyethylacrylate, hydroxypropylacrylate, hydroxyethylmethacrylate, hydroxypropylmethacrylate, C₁-C₅ acrylic acid esters, C₁-C₅ methacrylic acid esters and combinations thereof, and of which
• the carboxylic acid groups are partially or totally neutralised by:
∘ 70 mol% of Na⁺ and
∘ from 10 to 30 mol% of at least one cation chosen among Na⁺, K⁺, Li⁺ and combinations thereof.

2. The method according to claim 1, comprising:
A. preparation of an aqueous suspension of the material (M) comprising:
A1. water,
A2. at least one material (M) and
A3. at least one copolymer (P),
B. wet grinding of the material (M) in the aqueous suspension and
C. partial separation of the water from the aqueous suspension comprising the ground material (M).

3. The method according to claim 2, also comprising:
D. drying the suspension of the ground material (M) and optionally
E. treating the ground and dried material (M) with at least one hydrophobising agent.

4. The method according to one of claims 2 or 3, in which:
- the ground material (M) has a median particle diameter d₅₀ by weight (determined by settling) of from 0.1 to 3 µm, preferably from 0.1 to 2.8 µm, more preferentially from 0.4 to 2.6 µm, much more preferentially from 0.6 to 2.5 µm or
- the ground material (M) has a specific surface area, measured using the BET method in accordance with standard ISO 9277 (2010), ranging from 1 to 50 m²/g, preferentially from 2 to 20 m²/g and more preferentially from 3 to 10 m²/g or
- the material (M) is chosen among marble, limestone, chalk, dolomite, mixtures thereof and combinations thereof or is of natural origin or synthetic origin, for example vaterite, calcite aragonite, mixtures thereof and combinations thereof.

5. The method according to one of claims 2 to 4, in which the aqueous suspension in step (A) comprises from 40 to 70% by weight, preferably from 50 to 70% by weight, of material (M).

6. The method according to one of claims 2 to 5, in which the aqueous suspension obtained after separation (C) comprises at least 72% by weight, preferably at least 74% by weight, more preferentially at least 76% by weight, in particular from 72 to 81% by weight or from 74 to 81% by weight or even from 76 to 81% by weight, of ground material (M) relative to the amount by weight of suspension.

7. The method according to one of claims 1 to 6, in which the carboxylic acid groups of the copolymer (P) are partially neutralised, preferably by Na⁺, more preferentially neutralised to at least 80 mol% by Na⁺, much more preferentially neutralised to at least 90 mol% by Na⁺ or neutralised to 100 mol% by Na⁺.

8. The method according to one of claims 2 to 7, in which the grinding (B) is carried out in the presence of from 0.05 to 0.5% by weight, preferably of from 0.08 to 0.4% by weight, more preferentially of from 0.1 to 0.3% by weight, even more preferentially of from 0.12 to 0.2% by weight, of copolymer (P) relative to the amount by weight of material (M).

9. The method according to one of claims 2 to 8, in which the partial separation (C) of the water from the aqueous suspension is carried out using at least one means chosen among a mechanical means, a thermal means; preferably by a thermal means, optionally under vacuum or optionally combined with a means of suction.

10. The method according to one of claims 3 to 9, in which the ground material (M) is dried by at least one means chosen among a spray-drying means, a lyophilisation means, a spraying means, a rotary kiln, a heating strip, a means of air-pulsed heating, a fluidised bed, a means of fluidised lyophilisation and a means of nozzle-drying; preferably by at least one spraying means.

11. The method according to one of claims 3 to 10, in which the hydrophobising agent is chosen among:
- a carboxylic acid, preferably an aliphatic carboxylic acid, in particular a C₄-C₂₄-aliphatic carboxylic acid, more preferentially an aliphatic monocarboxylic acid, in particular a C₄-C₂₄-aliphatic monocarboxylic acid, in particular stearic acid;
- a succinic acid anhydride derivative mono-substituted by a straight, branched or cyclic C₂-C₃₀-alkyl group, and a reaction product of such a derivative;
- a mixture of phosphoric acid monoesters, phosphoric acid diesters or their reaction products;
- a polyhydrogenosiloxane, an inert silicone compound, preferably an inert silicone oil, in particular polydimethylsiloxane, and mixtures thereof;
- a C₆-C₁₄-aliphatic aldehyde, preferably a C₆-C₁₂-aliphatic aldehyde, more preferentially a C₈-C₉-aliphatic aldehyde, particularly hexanal, heptanal, octanal, nonanal, decanal, undecanal, dodecanal, tridecanal, butadecanal and mixtures thereof.

12. The method according to one of claims 3 to 11, in which the ground and dried material (M) comprises less than 0.5% by weight, preferably less than 0.4% by weight or less than 0.2% by weight, of moisture relative to the total amount of material (M).

13. The method according to one of claims 1 to 12, in which the material (M) that has been ground, dried and treated, optionally with at least one hydrophobising agent, has a hygroscopicity less than or equal to 0.26 mg/m², preferably less than or equal to 0.21 mg/m², measured according to the method described in the examples.
